# EUROPÄISCHE PATENTSCHRIFT

(11) **EP 0 796 555 B1**
(45) Veröffentlichungstag und Bekanntmachung des Hinweises auf die Patenterteilung: **11.09.2002**
(21) Anmeldenummer: 97104343.5
(22) Anmeldetag: 14.03.1997
(51) Int. Cl.: A01D 91/00

(54) **Ernteverfahren für Feldfrüchte zur Verminderung der Konzentration luftbürtiger Schadstoffe in Nahrungs- und Futtermitteln**
Method for harvesting agricultural products to reduce the concentration of harmful products from the air in food-stuff
Procédé de récolte de produits agricoles pour la réduction de concentration de produits nuisibles provenant de l'air dans les substances alimentaires

(30) Priorität: 23.03.1996 DE 19611527
(43) Veröffentlichungstag der Anmeldung: 24.09.1997
(73) Patentinhaber: Forschungszentrum Jülich GmbH, 52425 Jülich (DE)
(72) Erfinder: Muszinski, Marc, 55122 Mainz (DE)

(56) Entgegenhaltungen:
- DE-A- 2 704 270
- DE-A- 3 606 030
- DE-B- 1 293 508

## Beschreibung

Die Erfindung bezieht sich auf ein Ernteverfahren für Feldfrüchte.

Obwohl sich westeuropäische Druckwasserreaktoren erheblich von dem am 26.04.1986 in der Ukraine havarierten "Tschernobyl-Typ" unterscheiden, könnte es auch hier bei einer Kernschmelze zur Freisetzung radioaktiver Aerosole kommen. Nachteilhaft werden bei einer solchen Freisetzung im Freiland produzierte Nahrungsmittel kontaminiert und gelangen dann in den Verkehr.

Aufgabe der Erfindung ist die Schaffung eines Verfahrens, welches die Kontamination von derart belasteten Nahrungsmitteln und Futtermitteln, die in den Verkehr gelangen, reduziert.

Die Aufgabe wird gelöst durch ein Verfahren, gemäß dem nur der zum Zeitpunkt einer Kontamination mit radioaktiven Aerosole noch nicht entwickelte Pflanzenteil abgeerntet und zum Nahrungs- oder Futtermittel weiterverarbeitet wird. Verfahrensgemäß werden folglich nicht direkt kontaminierte, eßbare Pflanzenteile getrennt von den direkt kontaminierten, (in der Regel) nicht eßbaren Pflanzenteilen geerntet.

Das erfindungsgemäße Verfahren vermindert im besondern Maße die radioaktive Belastung von eßbaren Feldfrüchten, die konventionell im Mähdruschverfahren geerntet werden. Es ist also insbesondere bei Getreide anwendbar.

Strontium 90 oder Plutonium verbleiben in den Pflanzenteilen, die direkt kontaminiert wurden und werden nicht in Früchte oder Korn transloziert. Ursache hiefür ist das phloem-immobile Verhalten der beiden radioaktiven Substanzen in einer Pflanze.

Zum Zeitpunkt der Kontamination noch nicht entwickelte Pflanzenteile werden durch Strontium 90 oder Plutonium zwar nicht unmittelbar kontaminiert. Der übliche Erntevorgang von Feldfrüchten führt jedoch zu einer sekundären Kontamination des Korns infolge des Drusches mit direkt kontaminierten Pflanzenteilen wie Stroh. Durch das erfindungsgemäße Verfahren wird im Unterschied zum praxisüblichen Mähdrusch der gesamten Pflanzen die sekundäre Kontamination (zumindest weitgehend) verhindert.

Beim praxisüblichen Tangential-Dreschsystem wird das Erntegut, z. B. Stroh und Ähren von Weizen nach dem Einzug durch Haspel und Einzugswalze über ein Förderband zur Dreschtrommel transportiert. Hier werden 80-90 % des Korns abgeschieden. Unvollständig ausgedroschene Ährenteile werden erneut der Dreschtrommel zugeführt. Das übrige Korn wird auf dem Schüttler von Stroh getrennt. Die Spreu wird rückseitig ausgeblasen.

Da bei diesem Verfahren durch rotierende Schlagwerkzeuge ein intensiver Kontakt zwischen Stroh und Korn hergestellt wird und Ähren und Körner mit dem entstehenden Staub in Berührung kommen, werden die bisher nicht oder gering kontaminierten Pflanzenteile sekundär durch äußerlich am Stroh anhaftende Radionuklide kontaminiert.

Es hat sich gezeigt, daß (bei chronischer Deposition) rund 70 % des Plutonium-Gehaltes von Weizenkorn auf Sekundärkontamination beim Mähdrusch zurückzuführen ist. Etwa 0,5 % der auf vegetativen Pflanzenteilen deponierten Aerosole gelangten im Mähdrescher an das Korn. Anhaftender oder aufgewirbelter Boden ist mit < 3 % gegenüber dem Übergang von direkt kontaminierten vegetativen Pflanzenteilen zu vernachlässigen.

Eine Kontamination von Pflanzenteilen mit phloem-immobilen radioaktiven Substanzen wie Strontium oder Plutonium, die zum Zeitpunkt der Kontamination noch nicht entwickelt waren, wird verhindert, indem diese Teile getrennt von den kontaminierten Teilen z. B. mittels geeignet eingestellter Schneidtischhöhe eines Mähdreschers abgeerntet werden. Eine geeignet eingestellte Schneidtischhöhe liegt vor, wenn hierdurch nur die zum Zeitpunkt der Kontamination noch nicht entwickelten Pflanzenteile abgeschnitten werden.

Weizen, Hafer, Gerste oder Roggen werden daher zur Lösung der Aufgabe im Fall einer Kontamination, die vor dem Ährenschieben stattgefunden hat, in Höhe des Fahnenblattes abgeschnitten und anschließend der Verwertung als Nahrungsmittel zugeführt.

Auf diese Weise kann bis zu 90 % der andernfalls üblichen unerwünschten "Strontiumernte" vermieden werden.

Eine Reduzierung der Kontamination von für den Verzehr bestimmten Hülsenfrüchten wie Ackerbohne und Erbsen kann ebenfalls so herbeigeführt werden. Gleiches gilt für Raps.

Das Verfahren erzielt insbesondere dann die erwünschte Wirkung, wenn die Pflanze zum Zeitpunkt der Kontamination noch nicht voll ausgereift war.

Die Ernte von Weizen wurde beispielsweise 130 Tage nach einer künstlichen Kontamination durchgeführt. Korn- und Stroherträge wurden bestimmt. Radionuklidkonzentrationen (¹³⁷Cs, ⁹⁰Sr), Feuchte und Gewichtsanteil der einzelnen Pflanzenfraktionen wurden ermittelt.

Hierzu wurden zunächst die einzeln geernteten Ähren von im Entwicklungsstadium "Schossen" kontaminiertem Weizen gedroschen und die Radioaktivität im Korn gemessen. Zur Abschätzung einer möglichen Sekundärkontamination des Korns durch Mähdrusch mit direkt kontaminierten Stroh wurden die Halme des im Schossen kontaminierten Weizens zusammen mit inaktiven Ähren nach dem unten beschriebenen Verfahren gedroschen.

Ein Mähdrusch wurde wie folgt simuliert:
Die beiden Messer einer Küchenmaschine (MOULINETTE (TH) 899, Außendurchmesser 17 cm) wurden durch Überkleben mit Textilband abgestumpft und die Drehzahl durch einen Tyristor-Regler auf 600 U/min herabgesetzt. Gedroschen wurden jeweils drei Ähren mit Stroh von drei Halmen und zwar 10 Sekunden sowie 30 Sekunden lang, um unterschiedliche Intensitäten des Korn-Stroh-Kontaktes zu untersuchen.

Für die Trennung des Korns von Spreu und Stroh wurde das Dreschgut in einem flachen Behälter ausgebreitet, um zunächst größere Strohteile mit der Pinzette abzusammeln. Dann wurde ca. 1 cm über das Gemisch ein Büchnertrichter gehalten, durch den mit einem (Haushalts-)Staubsaugers Luft gesaugt wurde. Während das Korn am Boden des Behälters liegen blieb, wurde die leichtere Fraktion des Gemisches (Spelzen, Spindel, Strohteile) angesaugt und im Trichter zurückgehalten.

Bei dieser "Windsichtung" wurden Korn und Dreschrest vollständig getrennt und der Radioaktivitätsbestimmung zugeführt. Kleine, durch den Trichter gesogene Staubpartikel konnten nicht bilanziert werden.

Mit dem Wort Translokation soll im folgenden der Eintransport über Leitgewebe (Xylem und/oder Phloem) ins Korn verstanden werden.

Die Höhe der sekundären Kontamination beim Mähdrusch wurde mit der Kontamination durch Translokation verglichen, indem beide Kontaminationspfade addiert und dann der jeweilige Beitrag zur Gesamtkontamination errechnet wurde. Es gelangte nur 3 % des Cäsiums sekundär ans Korn.

Beim Strontium war das Verhältnis der Kontaminationspfade umgekehrt: 90 % des ⁹⁰Sr wurden erst beim Drusch mit dem gesamten Halm an das Korn gebracht. Diese konnte von 90 % auf ≤ 15 % (= Meßgrenze) gesenkt werden, indem nur mit dem oberen, nicht direkt kontaminierten Halmteil gedroschen wurde.

Durch eine Erhöhung der Dreschdauer wurde ein höherer Anteil der Radioaktivität auf das Korn übertragen. Bei einer Dreschdauer von 10 Sekunden wurden 0,8 % des Cäsiums und 2,3 % des Strontiums vom Stroh auf das Korn übertragen. Bei dreifacher Dreschdauer verdreifachte sich auch der Anteil des übertragenen Cäsiums. Auch der Anteil des übertragenen Strontiums wurde erhöht, wobei jedoch die Streubreite sehr groß war.

## Patentansprüche

1. Ernteverfahren für Feldfrüchte, bei dem nur der zum Zeitpunkt einer Kontamination mit radioaktiven Aerosole noch nicht entwickelte Pflanzenteil geerntet und zum Nahrungsmittel weiterverarbeitet wird.

2. Ernteverfahren für Feldfrüchte, die konventionell im Mähdruschverfahren geerntet werden, nach vorhergehendem Anspruch.

## Claims

1. Method for harvesting field fruits which harvests and processes into foodstuffs only those plant portions which had not been developed at the time of contamination by radioadtive aerosols.

2. Method for harvesting field fruits which are harvested conventionally by way of mowing and threshing, according to the above claim.

## Revendications

1. Procédé de récolte de produits agricoles dans lequel on ne récolte que la partie de la plante qui n'est pas encore développée à l'instant d'une contamination par des aérosols radioactifs et on la transforme en la denrée alimentaire.

2. Procédé de récolte de produits agricoles qui sont récoltés habituellement par moissonage-battage suivant la revendication précédente.
